(19) Europäisches Patentamt
European Patent Office
Office européen des brevets

(11) **EP 2 058 639 A2**

(12) **EUROPEAN PATENT APPLICATION**

(43) Date of publication:
**13.05.2009 Bulletin 2009/20**

(51) Int Cl.:
**G01L 9/06** (2006.01)

(21) Application number: **08168429.2**

(22) Date of filing: **05.11.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **08.11.2007 US 937438**

(71) Applicant: **Honeywell International Inc.**
**Morristown, NJ 07962 (US)**

(72) Inventors:
• **Rahn, Curtis H.**
**Plymouth, MN 55447 (US)**
• **Johnson, Russell L.**
**New Brighton, MN 55112 (US)**

(74) Representative: **Buckley, Guy Julian**
**Patent Outsourcing Limited**
**1 King Street**
**Bakewell**
**Derbyshire DE45 1DZ (GB)**

(54) **Silicon pressure sensor**

(57) A diaphragm for a pressure sensor includes a central portion having a primary thickness (30) and a surrounding portion having a secondary thickness (38) greater than the primary thickness (30). The pressure sensor includes the diaphragm, a fluid conduit capped by the diaphragm, and a piezoelectric bridge for each of the primary and secondary portions to generate a signal indicative of the displacement of the portions; and a method of producing the sensor.

FIG.1-1

**Description**

**BACKGROUND OF THE INVENTION**

To achieve high overpressure ratings (greater than 2X), the diaphragm thickness of present silicon pressure sensor designs have to be increased accordingly to that thickness required to reduce the stress in the diaphragm at the overpressure rating below the rupture point of the silicon. The need for a thicker diaphragm results in a reduced sensitivity over the normal operating pressure range, which is undesirable. One device providing increased sensitivity is disclosed in U.S. Patent No. 6,877,380 to Lewis titled "Diaphragm for Bonded Element Sensor," and herein incorporated by reference. While providing increased sensitivity, the device does not address the situation where higher overpressure ratings are needed along with sufficient sensitivity over the operating pressure range. What is needed is a diaphragm design that allows higher overpressure ratings while minimizing the reduction in sensitivity over the operating pressure range as well as providing improved linearity capability.

**SUMMARY OF THE INVENTION**

The present invention provides silicon-based pressure sensors and methods of making the sensors. An example sensor includes a diaphragm formed by an etching process resulting in two concentric diaphragm portions each with a different diameter and thickness.

By making the aspect ratio (diameter/thickness) of the primary (inner) diaphragm greater than the aspect ratio of the secondary (outer) diaphragm, the overpressure rating of the more sensitive inner diaphragm is increased due to a reduction in the stress at the edge of the inner diaphragm caused by the bending of the secondary diaphragm at the overpressure levels.

**BRIEF DESCRIPTION OF THE DRAWINGS**

The preferred and alternative embodiments of the present invention are described in detail below with reference to the following drawings.

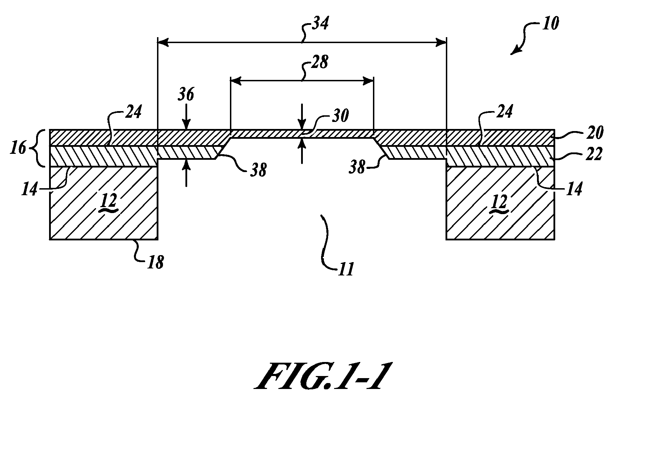

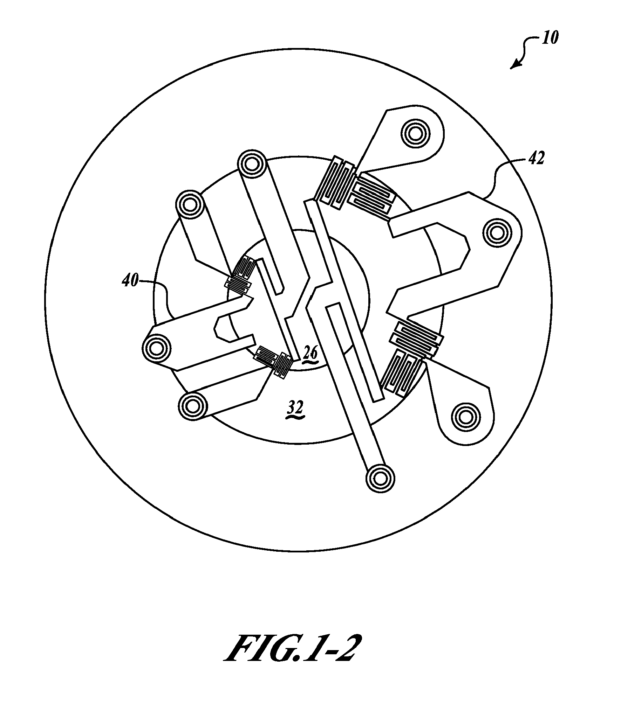

FIGURE 1-1 is a cross-section of a silicon pressure sensor according to the present invention;

FIGURE 1-2 is a top view of the silicon pressure sensor of FIGURE 1-1 showing piezoresistive elements;

FIGURE 2 is a top view of a rectangular diaphragm according to the present invention, shown without piezoresistive elements for clarity;

FIGURE 3 is a flow chart of an example method of manufacturing a device according to the present invention;

FIGURE 4 shows an intermediate step in the fabrication of a silicon pressure sensor according to the present invention;

FIGURE 5 shows an intermediate step in the fabrication of a silicon pressure sensor according to the present invention;

FIGURE 6 shows an electrical schematic of the dual bridge configured structure;

FIGURE 7 shows a theoretical (calculated) output of each bridge; and

FIGURE 8 shows the combined output of the two bridges of the invention.

**DETAILED DESCRIPTION OF THE PREFERRED EMBODIMENT**

FIGURES 1-1 and 1-2 show a cross-section and top views, respectively, of a pressure sensor assembly 10 constructed in accordance with an embodiment of the present invention. The assembly 10 includes a fluid conduit 11 defined by a tube 12 which may be made of glass, glass frit, or other materials depending on the intended use of the assembly 10. The tube 12 is attached on a first end 14 by a diaphragm assembly 16, and a second end 18 of the tube 12 is configured to allow attachment to a pressure vessel (not shown) or similar pressurized environment containing fluid to be monitored.

The diaphragm assembly 16 includes a first layer 20 which is made of epitaxial silicon and a substrate layer 22 which is made of heavily doped silicon, though it will be appreciated that other materials having similar properties known to those having ordinary skill in the art may be used. The first layer 20 is an epitaxial layer grown on the substrate layer 22. A diaphragm wall 24 including portions of the first layer 20 and the substrate layer 22 surrounds the diaphragm assembly 16. In one embodiment, the diaphragm assembly 16 is attached to the tube 12 with a thermo-electric bond for the case where the conduit or tube is Pyrex®. A shoulder 38 has a thickness that increases gradually from a primary thickness 30 to a secondary thickness 36.

The primary aspect ratio is a primary diameter 28 divided by the primary thickness 30, and the secondary aspect ratio is a secondary diameter 34 divided by the secondary thickness 36. A secondary portion (diameter 28) is configured to exhibit less sensitivity than a primary portion (diameter 34), for example, one-fourth the sensitivity of the primary portion. By making the primary aspect ratio greater than the secondary aspect ratio, the overpressure rating of the more sensitive primary portion is increased due to a reduction in the stress experienced by the primary portion caused by deformation of the secondary portion at overpressure conditions. For applications where high overpressure ratings are not required, the assembly 10 can be used to significantly increase the dynamic range of the primary portion.

In a particular embodiment, the primary aspect ratio, for example a primary diameter of 40 mils, a thickness of 2 mils and the secondary diameter of 80 mils and thickness of 8 mils in the calculation, is twice the secondary aspect ratio, while both portions have typical overpressure ratings of 1.5X. In this configuration, the operating pressure rating of the secondary portion will be four times the operating pressure rating of the primary portion (the operating pressure rating of a diaphragm is inversely proportional to the square of the diaphragm aspect ratio). For a sensor assembly 10 made according to this example, operating the assembly 10 at the pressure rating of the secondary portion will allow for an overpressure rating of the primary portion to be increased from 1.5X to 4X.

FIGURE 1-2 shows a top view of the assembly 10 of FIGURE 1-1. The assembly 10 includes a primary piezoresistive bridge assembly 40 configured to generate a signal reflective of a displacement of a primary portion 26 and a secondary piezoresistive bridge assembly 42 configured to generate a signal reflective of a displacement of a secondary portion 32. The piezoresistive bridge assemblies 40, 42 may be configured as shown in U.S. Patent No. 6,718,830 to Johnson titled "Customized Span Compensation of SOI Pressure Sensor", herein incorporated by reference though any configuration known to those having ordinary skill in the art may be used. In practice, the output of the bridge assemblies 40, 42 can be measured and added to increase the signal output.

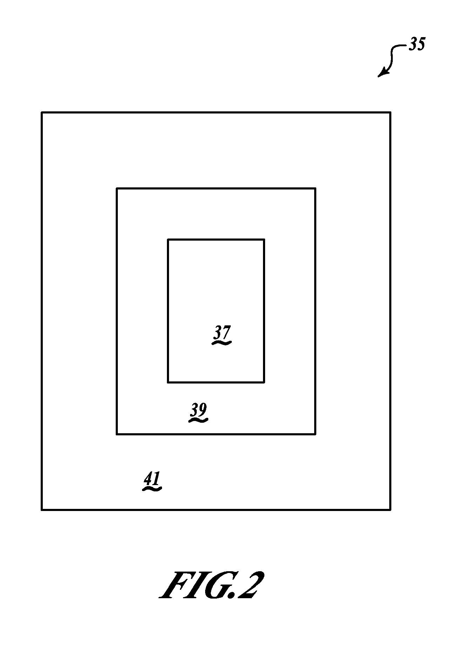

FIGURE 2 is a top view of an alternate embodiment of the present invention including a high pressure rectangular plate diaphragms 35 surrounded by a rectangular diaphragm wall 41, the output signal increases with increasing pressure. The incorporation of a diaphragm according to the present invention into the rectangular plate diaphragm design will cause a reduction in stress in the primary portion 37 as a function of bending of the secondary portion 39, and thus improve the linearity of the primary portion 37.

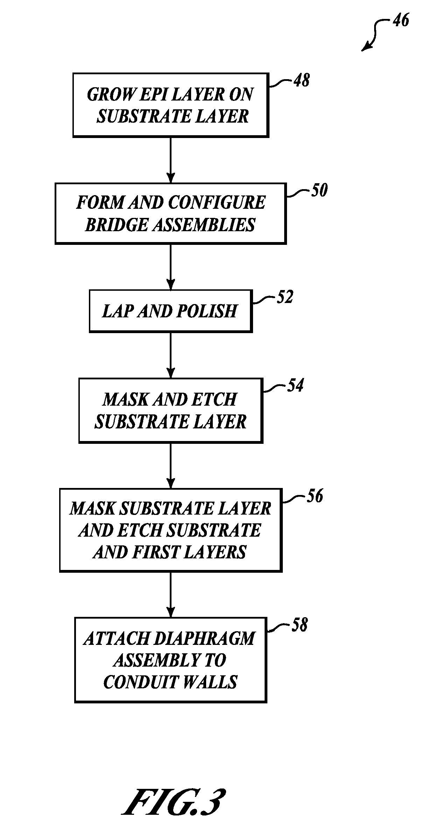

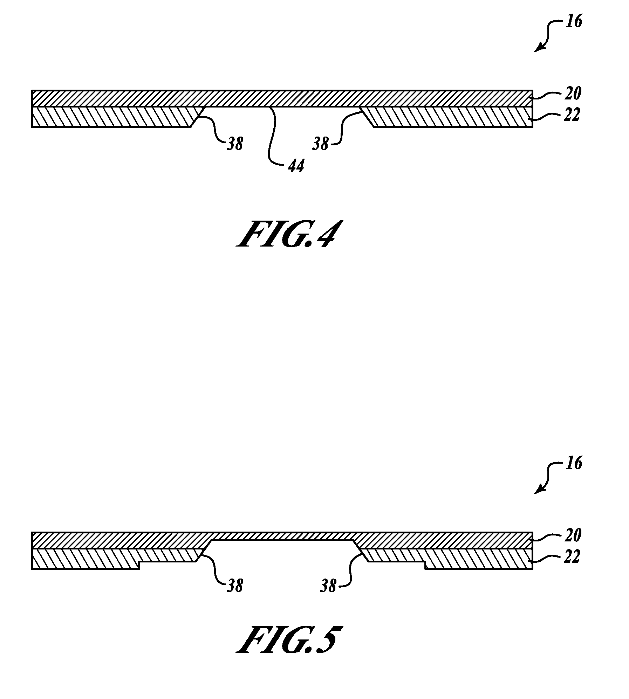

FIGURE 3 shows a block diagram of an example method 46 of making the sensor assembly 10. While specific materials and steps are described herein, there are many materials and steps known to those having ordinary skill in the art which may be used. The diaphragm assembly 16, as noted above, includes a first layer 20 of N-type epitaxial silicon which is grown on a substrate layer 22 of heavily doped P++ silicon layer at a block 48. As shown in a block 50, the substrate layer 22 is masked and standard electro-chemical etching is used to etch the substrate layer 22 to expose a bottom surface 44 (FIG. 4) of the first layer 20. FIGURE 4 is a cross-section of the diaphragm assembly 16 after the etching step of block 50.

After forming the structure shown in FIGURE 4, the substrate layer 22 is masked, and plasma etching is used to etch the substrate layer 22 and the first layer 20, as shown in a block 52. Note that an initial thickness of the first layer 20 is equal to the final thickness of the primary portion plus the depth of the plasma etch. FIGURE 5 shows a cross-section of the diaphragm assembly 16 after the etching step of block 52. After etching, the layers 20, 22 are lapped and polished as shown in a block 54. At a block 56, the primary and secondary bridge assemblies 40, 42 are formed to the primary and secondary portions, respectively, and configured. The diaphragm assembly 16 is attached to the tube 12 (as shown at a block 58) to produce the pressure sensor assembly 10 shown in FIGURES 1-1 and 1-2.

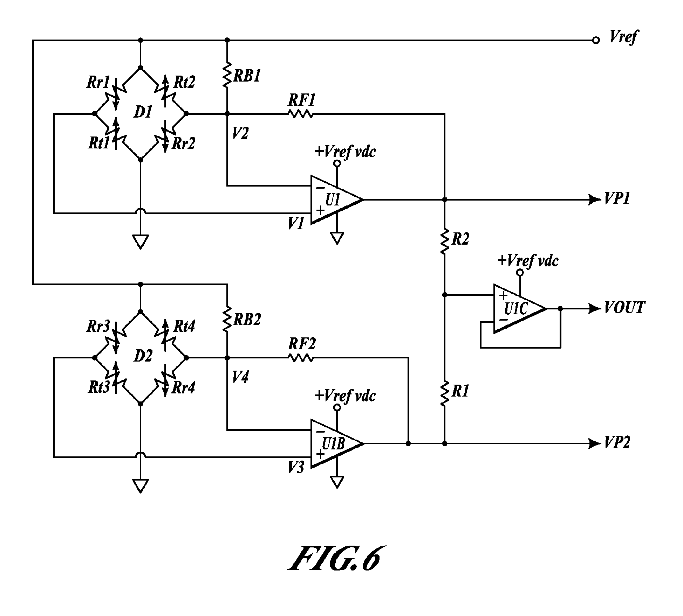

The output signal that can be generated from such an arrangement is illustrated in FIGURES 6 through 8. FIGURE 6 shows an electrical schematic of the dual bridge configuration, where D1 represents the primary bridge and D2 represents the secondary bridge. RF1, RF2, RB 1 and RB2 as shown can be used in conjunction with an operational amplifier to adjust the null and gain of the amplified bridge outputs, VP1 and VP2. The governing equations are:

1) Primary Pressure Channel Output in Voltage Ratio of VP1/Vref:

$$VP1/Vref = \frac{\{1 + RF1 * [(1/Rr2) * (1 - (Rr1 * Rr2)/(Rt1 * Rt2))/(1 + Rt2/Rr2 - (1/RB1) * (Rr1/Rt1)\,]\}}{1 + Rr1/Rt1}$$

2) Secondary Pressure Channel Output in Voltage Ratio of VP2/Vref:

$$VP2/Vref = \frac{\{1 + RF2 * [(1/Rr4) * (1 - (Rr3 * Rr4)/(Rt3 * Rt4))/(1 + Rt4/Rr4 - (1/RB2) * (Rr3/Rt3)\,]\}}{1 + Rr3/Rt3}$$

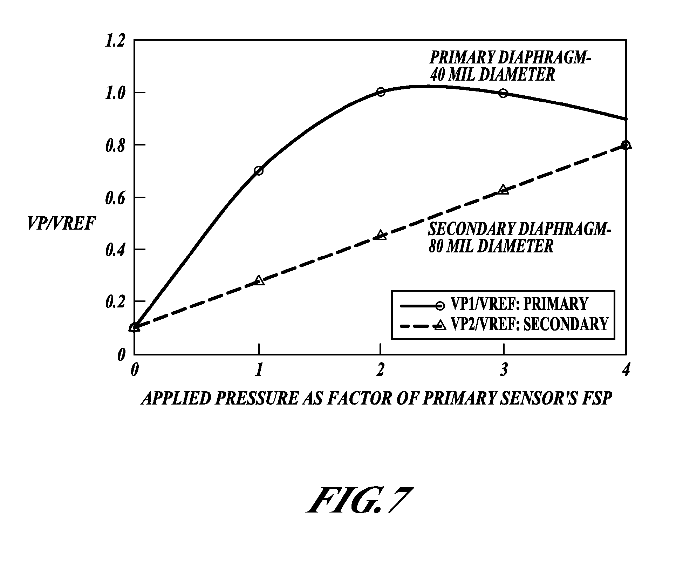

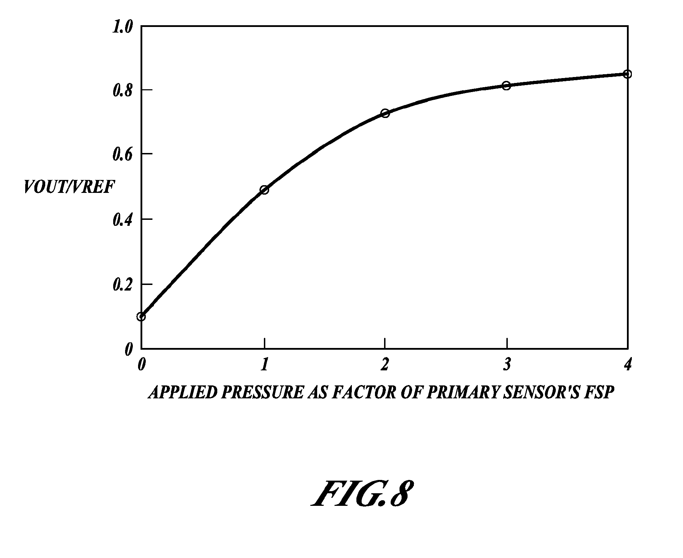

FIGURE 7 shows the calculated output from each bridge for pressures as high as 4X the full scale pressure of the primary bridge. FIGURE 8 shows the calculated pressure from the combined bridges when configured as in FIGURE 6. It is shown for a pressure range up to 4X the full scale pressure of the primary bridge, which would rupture the diaphragm of the primary bridge if it were not used in conjunction of the secondary diaphragm. The combined output is:

$$Vout/Vref = ((R2/R1)*VP1 + VP2)/(1 + R2/R1)$$

While the preferred embodiment of the invention has been illustrated and described, as noted above, many changes can be made without departing from the spirit and scope of the invention. Accordingly, the scope of the invention is not limited by the disclosure of the preferred embodiment. Instead, the invention should be determined entirely by reference to the claims that follow.

**Claims**

1. An apparatus for sensing pressure comprising:

   a central portion having a first thickness (30);
   a surrounding portion surrounding the central portion and having a thickness greater than the first thickness (30).

2. The apparatus of Claim 1, wherein the central and surrounding portions are circular.

3. The apparatus of Claim 1, wherein the central and surrounding portions are rectangular.

4. The apparatus of Claim 1, wherein the central portion includes a layer of N-type epitaxial silicon, and the surrounding portion includes a layer of heavily doped P++ silicon.

5. The apparatus of Claim 1, wherein an aspect ratio of the central portion is greater than an aspect ratio of the surrounding portion.

6. The apparatus of Claim 1, further comprising:

   a fluid conduit capped on a first end by the diaphragm;
   a primary and a secondary piezoresistive bridge, the primary bridge configured to produce a signal indicative of the deformation of the central portion and the secondary bridge configured to produce a signal indicative of the deformation of the surrounding portion.

7. A method comprising:

   growing a first layer of N-type epitaxial silicon on a substrate layer of heavily doped P++ silicon;
   fabricating a primary piezoelectric bridge in a primary portion of the first layer;
   fabricating a secondary piezoelectric bridge in a secondary portion of the first layer;
   masking a portion of the substrate layer;
   etching an exposed surface of the substrate layer to expose a first surface of the first layer;
   masking a portion of the substrate layer; and
   etching an exposed surface of the substrate layer and of the first layer to a predetermined thickness.

8. The method of Claim 7, further comprising:

   bonding a surface of the substrate layer to an end of a fluid conduit.

9. The method of Claim 7, wherein etching an exposed surface of the substrate layer to expose a surface of the first layer includes etching using one of a wet etching process and a standard electro-chemical etching process.

10. The method of Claim 7, wherein etching an exposed surface of the substrate layer and of the first layer to a predetermined thickness includes etching using a plasma etching process.

**FIG.1-1**

*FIG.1-2*

*FIG.2*

46

48
GROW EPI LAYER ON
SUBSTRATE LAYER

50
FORM AND CONFIGURE
BRIDGE ASSEMBLIES

52
LAP AND POLISH

54
MASK AND ETCH
SUBSTRATE LAYER

56
MASK SUBSTRATE LAYER
AND ETCH SUBSTRATE
AND FIRST LAYERS

58
ATTACH DIAPHRAGM
ASSEMBLY TO
CONDUIT WALLS

FIG.3

*16*

*20*

*22*

*38*  *38*

*44*

## FIG.4

*16*

*20*

*22*

*38*  *38*

## FIG.5

**FIG.6**

**FIG.7**

**FIG.8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6877380 B, Lewis

- US 6718830 B, Johnson